# EUROPÄISCHE PATENTANMELDUNG

(11) **EP 1 772 341 A2**
(43) Veröffentlichungstag der Anmeldung: **11.04.2007**
(21) Anmeldenummer: 06121219.7
(22) Anmeldetag: 25.09.2006
(51) Int. Cl.: B61L 3/20, H04B 3/56

(54) **Bahnanlage und Kommunikationssystem zur Datenübertragung für eine Bahnanlage**

(30) Priorität: 28.09.2005 DE 102005047756
(71) Anmelder: SIEMENS AKTIENGESELLSCHAFT, 80333 München (DE)
(72) Erfinder: Griepentrog, Gerd, 91468 Gutenstetten (DE); Hofestädt, Holm, 38173 Sickte (DE); Oechsle, Walter, 90766 Fürth (DE); Rupp, Jürgen, 91056 Erlangen (DE); Rupprecht, Markus, 90587 Tuchenbach (DE)

(57) **Zusammenfassung**

Die Erfindung betrifft eine Bahnanlage mit Fahrstrecken für spurgeführte Fahrzeuge, insbesondere Schienenfahrzeuge, und ein Kommunikationssystem zur Datenübertragung für eine Bahnanlage, mit längs der Fahrstrecken verlaufenden Stromleitern (1), die an definierte Stellen (2), insbesondere an Einspeisepunkten, mittels Schaltern (7) miteinander verbindbar und bei Bedarf wieder voneinander trennbar sind, wobei die Fahrzeuge mit Hilfe von an den Stromleitern (1) anliegenden Stromabnehmern mit elektrischem Strom versorgt werden, und mit an den Stromleitern (1) streckenseitig und fahrzeugseitig angeschlossenen Kommunikationseinrichtungen (8), welche ein Hochfrequenzsignal in die Stromleiter (1) einspeisen und empfangen und mittels des Hochfrequenzsignals Daten über die Stromleiter (1) austauschen können. Um bei Verwendung einer Bahnstromanlage als Power-Line-System eine ungestörte Datenübertragung sicherzustellen, sind an den Schaltern (7) HF-Brücken (9) vorgesehen, welche die Schalter (7) in Bezug auf das Hochfrequenzsignal elektrisch überbrücken.

## Beschreibung

Die Erfindung betrifft eine Bahnanlage mit Fahrstrecken für spurgeführte Fahrzeuge, insbesondere Schienenfahrzeuge, und ein Kommunikationssystem zur Datenübertragung für eine Bahnanlage gemäß den Oberbegriffen der Ansprüche 1 und 2.

Bahnanlagen mit einem Streckennetz für elektrische Schienenfahrzeuge sind allgemein bekannt. Dabei verlaufen längs der Fahrstrecken Stromleiter, die z.B. an Einspeisepunkten mittels Schaltern miteinander verbunden sind. Die Stromversorgung der Fahrzeuge erfolgt mit Hilfe von Stromabnehmern, die an den Stromleitern anliegen. Insbesondere zur Steuerung der Schienenfahrzeuge werden Daten als moduliertes Hochfrequenzsignal in die Stromleiter eingespeist, wozu an der Strecke (als auch in den Schienenfahrzeugen) Kommunikationseinrichtungen an den Stromleitern angeschlossen sind. Eine automatisierte Zugbeeinflussung erfordert eine kontinuierliche Übertragung der Daten, wobei die Übertragung den besonderen Bedingungen des Bahnbetriebs unterliegt.

Die Datenübertragung über die Bahnstromanlage ist auch als Power-Line-System (Power Line Communication) bekannt, bei dem die Frequenzen der Hochfrequenzsignale typischerweise im Bereich von 30 kHz bis 148 kHz liegen. Dem entsprechen Wellenlängen von 500 m bis 6 km, was in der Größenordnung der typischen Bahnanlagenstrukturlängen liegt, woraus signifikante Stehwelleneffekte und Resonanzerscheinungen herrühren können, was im schlimmsten Falle zu einer völligen Signalauslöschung führen kann. Abhängig von der Streckenstruktur und den Abmessungen der Bahnstromanlage lassen sich diese Schwierigkeiten beispielsweise durch die Verwendung von Abschlusswiderständen vermeiden. Diese Maßnahme ist aber nur wirksam, wenn die Bahnstromanlage bezogen auf das Power-Line-System und damit insbesondere bezogen auf die Ausbreitung der Hochfrequenzsignale während des Betriebs keine relevanten Veränderungen erfährt. Aus betrieblichen Gründen, beispielsweise bei Wartungsarbeiten am Bahnstromsystem, werden die zugehörigen Stromleiter von der Stromversorgung von Zeit zu Zeit getrennt. Hierzu dienen Schalter, die automatisch oder manuell bedienbar sind. Nachteilig ist dabei, dass es bei der Abtrennung zu Veränderungen des Power-Line-Systems mit den oben genannten unerwünschten Wirkungen kommen kann.

Die Aufgabe der Erfindung besteht darin, bei Verwendung einer Bahnstromanlage als Power-Line-System eine ungestörte Datenübertragung sicherzustellen.

Die Aufgabe der Erfindung wird in Bezug auf die Bahnanlage und in Bezug auf das Kommunikationssystem zur Datenübertragung für eine Bahnanlage gemäß den Merkmalen der Ansprüche 1 bzw. 2 gelöst.

Die Lösung sieht bezogen auf die Bahnanlage sowie das Kommunikationssystem vor, dass an den Schaltern HF-Brücken vorgesehen sind, welche die Schalter in Bezug auf das Hochfrequenzsignal elektrisch überbrücken. Die HF-Brücken sorgen also dafür, dass die geöffneten Schalter für das Hochfrequenzsignal jeweils keine Unterbrechung darstellen, während sie für die Stromversorgung der Bahnanlage die gewünschte Leiterunterbrechung darstellen.

Zweckmäßigerweise sind die streckenseitigen Kommunikationseinrichtungen an eine Kommunikationszentrale angeschlossen.

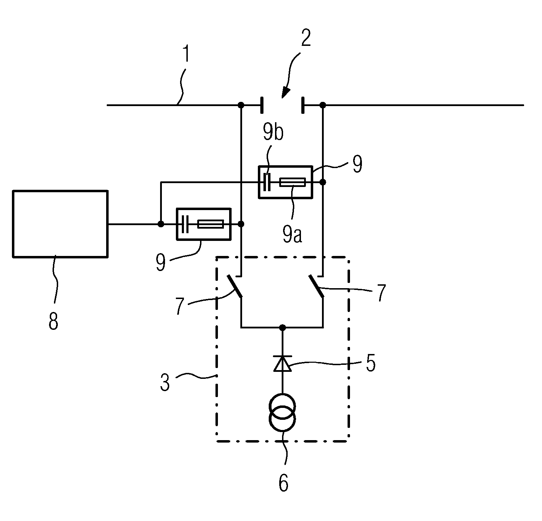

Die Erfindung wird nachfolgend anhand einer Zeichnung näher beschrieben, deren einzige Figur einen Ausschnitt mit zwei Abschnitten eines Fahrstreckennetzes einer Bahnanlage für elektrische Schienenfahrzeuge zeigt, die zur Bahnstromversorgung an einer Einspeisestelle 2 mit einem Unterwerk 3 verbindbar ist, wobei die Stromleiter 1 längs der Fahrstrecken verlaufen. Das Unterwerk 3 ist dabei in der Figur schematisch als Reihenschaltung eines Gleichrichters 5 und einer Stromquelle 6 dargestellt.

In der Figur sind die Stromleiter 1 einer Fahrstrecke dargestellt.

Das Unterwerk 3 ist mit Hilfe von Schaltern 7, die hier als Trennschalter wirksam sind, mit den Stromleitern 1 verbindbar. In der Figur sind zwei solcher Schalter 7 in geöffnetem Zustand gezeigt, welche in geschlossenem Zustand das Unterwerk mit den Stromleitern 1 verbinden.

Zur Datenübertragung ist eine streckenseitige Kommunikationseinrichtung 8 als Power-Line-Element vorgesehen, die hochfrequenzmäßig über HF-Brücken 9 mit der Bahnstromversorgung verbunden ist, wobei jeweils eine HF-Brücke 9 die Verbindung zu einem Abschnitt des Fahrstreckennetzes herstellt. Schematisch ist in die HF-Brücken 9 eine Sicherung 9a und ein Kondensator 9b eingezeichnet. Die HF-Brücken 9 können weitere Bauelemente wie Überspannungsbegrenzer, Übertrager zur Impedanzanpassung, Filterbausteine und dgl. enthalten. Relevant ist lediglich, dass der elektrische Widerstand der HF-Brücken 9 für die verwendeten Hochfrequenzsignale sehr klein ist, d. h. die HF-Brücken 9 stellen für das Hochfrequenzsignal keine Unterbrechung sondern eine Verbindung dar; für den Traktionsstrom der Bahnstromversorgung, der im Normalfall ein Gleichstrom oder ein Wechselstrom niedriger Frequenz von 16 2/3 oder 50 Hz ist, sind die HF-Brücken 9 hingegen undurchlässig. Das bedeutet, dass ein Öffnen der Schalter 7 das Power-Line-System nicht ändert, es also auch nicht zu überraschenden unerwünschten Resonanzerscheinungen oder Stehwelleneffekten kommt, wenn eine geeignete Bahnanlagenstruktur verwendet wird, die sich aufgrund der HF-Brücken 9 für das Power-Line-System nicht mehr ändert, also invariant bleibt.

Korrespondierend zu den streckenseitigen Kommunikationseinrichtungen 8 sind in den Fahrzeugen entsprechende fahrzeugseitige Kommunikationseinrichtungen (nicht weiter gezeigt) vorgesehen.

Die streckenseitigen Kommunikationseinrichtungen 8 sind mit einer ebenfalls nicht gezeigten Kommunikationszentrale verbunden.

## Patentansprüche

1. Bahnanlage mit Fahrstrecken für spurgeführte Fahrzeuge, insbesondere Schienenfahrzeuge,
mit längs der Fahrstrecken verlaufenden Stromleitern (1), die an definierte Stellen (2), insbesondere an Einspeisepunkten, mittels Schaltern (7) miteinander verbindbar und bei Bedarf wieder voneinander trennbar sind, wobei die Fahrzeuge mit Hilfe von an den Stromleitern (1) anliegenden Stromabnehmern mit elektrischem Strom versorgt werden, und
mit an den Stromleitern (1) streckenseitig und fahrzeugseitig angeschlossenen Kommunikationseinrichtungen (8), welche ein Hochfrequenzsignal in die Stromleiter (1) einspeisen und empfangen und mittels des Hochfrequenzsignals Daten über die Stromleiter (1) austauschen können,
**dadurch gekennzeichnet,**
**dass** an den Schaltern (7) HF-Brücken (9) vorgesehen sind, welche die Schalter (7) in Bezug auf das Hochfrequenzsignal elektrisch überbrücken.

2. Kommunikationssystem zur Datenübertragung für eine Bahnanlage mit Fahrstrecken für spurgeführte Fahrzeuge, insbesondere Schienenfahrzeuge,
mit Stromleitern (1), die an definierte Stellen (2), insbesondere an Einspeisepunkten, mittels Schaltern (7) miteinander verbindbar und bei Bedarf wieder voneinander trennbar sind, wobei die Fahrzeuge mit Hilfe von an den Stromleitern (1) anliegenden Stromabnehmern mit elektrischem Strom versorgt werden, und
mit an den Stromleitern (1) streckenseitig und fahrzeugseitig angeschlossenen Kommunikationseinrichtungen (8), welche ein Hochfrequenzsignal in die Stromleiter (1) einspeisen und empfangen und mittels des Hochfrequenzsignals Daten über die Stromleiter (1) austauschen können,
**dadurch gekennzeichnet,**
**dass** an den Schaltern (7) HF-Brücken (9) vorgesehen sind, welche die Schalter (7) in Bezug auf das Hochfrequenzsignal elektrisch überbrücken.

3. Kommunikationssystem,
**dadurch gekennzeichnet,**
**dass** die streckenseitigen Kommunikationseinrichtungen mit einer Kommunikationszentrale verbunden sind.
